(19) Europäisches Patentamt
European Patent Office
Office européen des brevets

(11) EP 3 779 307 B1

(12) **EUROPEAN PATENT SPECIFICATION**

(45) Date of publication and mention of the grant of the patent:
**14.02.2024 Bulletin 2024/07**

(21) Application number: **19788103.0**

(22) Date of filing: **19.04.2019**

(51) International Patent Classification (IPC):
**F24F 11/79** (2018.01)          **F24F 1/0047** (2019.01)
**F24F 11/89** (2018.01)          **F24F 120/12** (2018.01)
**F24F 1/0014** (2019.01)          **F24F 1/0057** (2019.01)

(52) Cooperative Patent Classification (CPC):
**F24F 1/0014; F24F 1/0047; F24F 1/0057;**
**F24F 1/0314; F24F 1/0317; F24F 11/79;**
**F24F 11/89; F24F 13/32; G01S 5/22;**
F24F 2013/0616; F24F 2120/12

(86) International application number:
**PCT/JP2019/016823**

(87) International publication number:
**WO 2019/203347 (24.10.2019 Gazette 2019/43)**

(54) **AIR CONDITIONER**

KLIMAANLAGE

CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2018 JP 2018081799**

(43) Date of publication of application:
**17.02.2021 Bulletin 2021/07**

(73) Proprietor: **MITSUBISHI HEAVY INDUSTRIES
THERMAL SYSTEMS, LTD.
108-8215 Tokyo (JP)**

(72) Inventors:
• **MIZUNO, Hisao**
  **Tokyo 108-8215 (JP)**
• **KONDO, Seiji**
  **Tokyo 108-8215 (JP)**
• **NISHIKAWA, Naoki**
  **Tokyo 100-8332 (JP)**
• **MARUYAMA, Masanori**
  **Tokyo 100-8332 (JP)**
• **SAKURAI, Takao**
  **Tokyo 100-8332 (JP)**
• **SHIMIZU, Kenji**
  **Tokyo 100-8332 (JP)**
• **IWATA, Hisao**
  **Tokyo 100-8332 (JP)**
• **ONOGAWA, Ei**
  **Tokyo 100-8332 (JP)**

(74) Representative: **Cabinet Beau de Loménie
158, rue de l'Université
75340 Paris Cedex 07 (FR)**

(56) References cited:
EP-A1- 3 088 807          EP-A1- 3 096 088
WO-A1-2010/074329          WO-A1-2015/095753
GB-A- 2 267 363          JP-A- 2010 134 367
JP-A- 2011 080 687          JP-A- 2011 174 705
JP-A- 2015 137 792

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to an air conditioner.

[Background Art]

When air in a space such as an office is adjusted, in many cases, an air conditioner is controlled so that a room temperature of the space is uniform. In contrast, for example, a method has been provided in which air conditioning of the room temperature is controlled for an area where a user is present (for example, refer to Patent Literature 1). When the air conditioning is controlled in this way, an air conditioning system needs to estimate a position where the user is present as accurately as possible. In the related art, various methods have been provided as a position estimation method.
Patent Literature 2 describes an air conditioner comprising a housing to be attached to a ceiling, the housing presenting for outlets provided with flaps, and four microphones, each of which is provided at a corner of the housing.

[Citation List]

[Patent Literature]

[Patent Literature 1]
Japanese Unexamined Patent Application, First Publication No. 2001-304655
[Patent Literature 2]
Japanese Unexamined Patent Application, First Publication No. 2010-134367

[Summary of Invention]

[Technical Problem]

If an outdoor environment requires the air conditioning, position estimation means such as a Global Positioning System (GPS) can be used. However, accuracy cannot be sufficiently acquired in an indoor environment requiring the air conditioning.
On the other hand, for example, it is conceivable to use the following method. Ultrasonic waves emitted from a terminal device such as a smartphone owned by a person are received by a plurality of microphones provided in a room, and an arrival time difference of the ultrasonic waves is used to estimate a position of the person by using a method similar to GPS positioning.
However, the positions where a microphone can be installed are limited, and costs are also limited. In spite of this limitation, it is required to detect the arrival time difference of the ultrasonic waves as accurately as possible.
The present invention provides an air conditioner capable of improving the accuracy of an ultrasound sensor at a lower cost.

[Solution to Problem]

In an unclaimed example, an air conditioner is provided including a housing, an air outlet formed in the housing and extending in first direction, a louver that pivots around an axis along an extending direction of the air outlet and is configured to guid air conditioning wind blown out from the air outlet in a direction intersecting with the axis, and ultrasound sensors disposed at both ends of the air outlet.
According to this configuration, the ultrasound sensors are provided at both ends of the air outlet. Therefore, noise generated by the air conditioning wind blown out from the air outlet can be avoided. In this manner, the received ultrasonic waves can be clear, and accuracy of the ultrasound sensors can be improved.
In addition, the ultrasound sensors can be disposed at positions spaced apart from each other. In this manner, when the ultrasonic waves are received from a single ultrasound oscillator source and are measured based on an arrival time difference thereof, requirements for a measurement error can be mitigated.
In addition, a configuration may be adopted such that the ultrasound sensors are provided in the housing. Therefore, an air conditioning system can be constructed at a lower cost compared to a configuration in which sensors are provided separately from the housing.

In the air conditioner, the housing may be embedded in a ceiling.

According to this configuration, the ultrasound sensor can be disposed on the ceiling, and the ultrasonic waves emitted from the ultrasound oscillator source in an indoor space can be received from the ceiling.

In an unclaimed example, the air conditioner may have a suction port and a pair of the air outlets. The suction port is formed in the housing and has a rectangular shape, and the pair of the air outlets extends in a direction along two mutually connected sides of the suction port. At least one of the ultrasound sensors may be disposed between the pair of air outlets.

According to this configuration, the ultrasound sensor can be efficiently disposed in the air conditioner having the rectangular suction port.

In the air conditioner, the housing may be installed on a wall, and the air outlet may extend a horizontal direction between a front surface of the housing and a bottom surface of the housing.

According to this configuration, the ultrasound sensor can be efficiently disposed in such an air conditioner installed on a wall.

According to the invention, an air conditioner is defined by claim 1.

According to this configuration, the ultrasound sensor is disposed via the bracket. Therefore, the ultrasound sensor can be more freely disposed.

[Advantageous Effects of Invention]

Noise generated by air conditioning wind blown out from the air outlet can be avoided.

In addition, the ultrasound sensors can be disposed at positions apart from each other.

In addition, a configuration is adopted so that the ultrasound sensors are provided in the housing. Therefore, an air conditioning system can be constructed at a lower cost, compared to a configuration in which sensors are provided separately from the housing.

[Brief Description of Drawings]

Fig. 1 is a schematic view of an air conditioning system according to a nonclaimed example.
Fig. 2 is a block diagram of the air conditioning system according to a nonclaimed example.
Fig. 3 is a view for describing an arrival time of ultrasonic waves, which varies depending on a position of an ultrasound sensor and a position of a terminal device.
Fig. 4 is a view when an air conditioner according a nonclaimed example.
Fig. 5 is a perspective view of an air conditioner according to claim 1.
Fig. 6 is a view when the air conditioner according to claim 1 is viewed from below.
Fig. 7 is a perspective view of an air conditioner according to a nonclaimed example.

[Description of Embodiments]

[First non claimed Example]

Hereinafter, an air conditioning system including an air conditioner according to a first non claimed example will be described in detail with reference to the drawings.

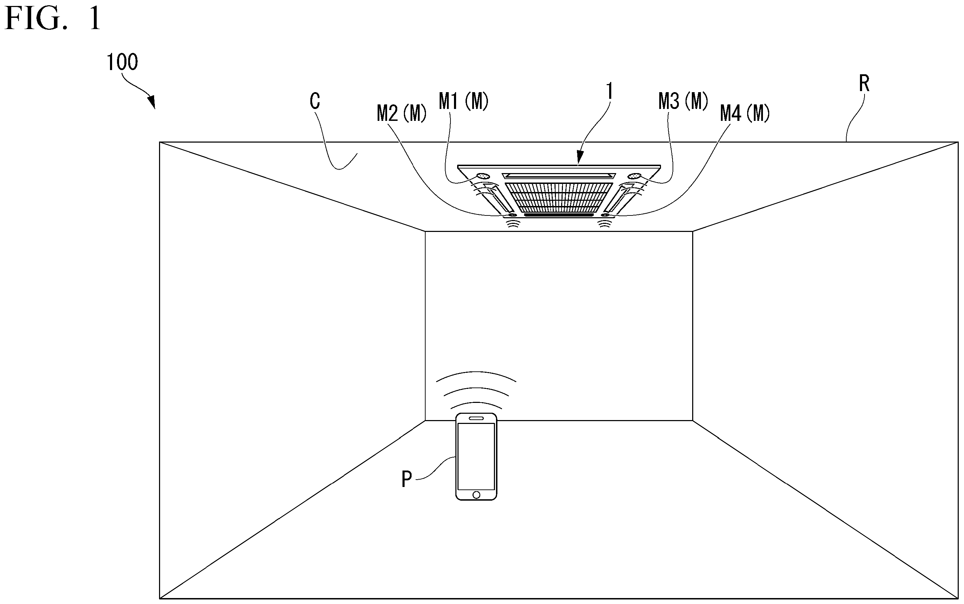

As illustrated in Fig. 1, an air conditioning system 100 of the present example includes an air conditioner 1 and a terminal device P.

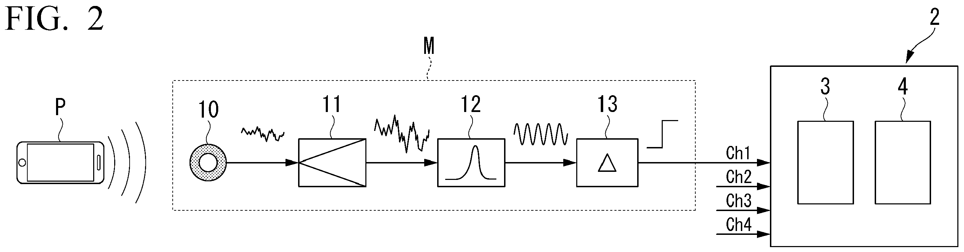

The air conditioner 1 has a plurality of ultrasound sensors M and a control device 2 (refer to Fig. 2).

The terminal device P has a function of emitting ultrasonic waves (vibration waves) having a predetermined frequency. For example, the terminal device P is an information processing device such as a smartphone.

The ultrasound sensor M is a receiver that receives the ultrasonic waves emitted from the terminal device P. As illustrated in Fig. 2, the ultrasound sensor M includes a microphone 10 that receives the ultrasonic waves emitted from the terminal device P, an amplifier 11 (amplifier) that amplifies a waveform of the ultrasonic waves, a filter 12 that extracts a specific frequency of the amplified ultrasonic waves, and a comparator 13 that detects arrival of the ultrasonic waves emitted from the terminal device P, based on the waveform extracted by the filter 12.

The ultrasound sensor M is electrically connected to the control device 2. When the arrival of the ultrasonic waves is detected by the comparator 13, information is transmitted to the control device 2.

The control device 2 has a function of controlling the air conditioner 1 to perform air conditioning on a portion of an indoor space R. The control device 2 estimates a position of the terminal device P by using an arrival time difference between the respective ultrasound sensors M, based on the ultrasonic waves emitted from the terminal device P. The control device 2 has an arrival time difference calculation unit 3 and a position estimation unit 4.

The arrival time difference calculation unit 3 refers to the ultrasound sensor M (for example, an ultrasound sensor M1) which is one of the ultrasound sensors M, and calculates a difference between a time at which the ultrasound sensor M1 serving as a reference detects the arrival of the ultrasonic waves and a time at which other three ultrasound sensors M2 to M4 detect the arrival of the ultrasonic waves. That is, the arrival time difference calculation unit 3 calculates a time difference (arrival time difference) between a time at which the ultrasonic waves reach the ultrasound sensor M1 and a time at which the ultrasonic waves reach the ultrasound sensors M2 to M4.

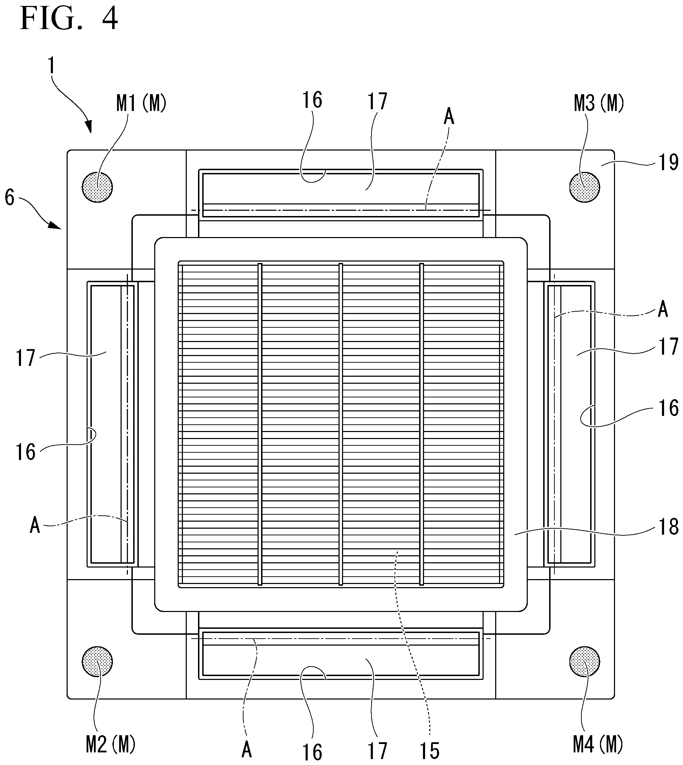

The position estimation unit 4 estimates a position where the ultrasonic waves are emitted, based on the ultrasonic waves emitted by the terminal device P. The control device 2 performs air conditioning control for the position estimated by the position estimation unit 4. Specifically, the control device 2 controls an angle of a louver 17 (refer to Fig. 4) of the air conditioner 1, and changes a direction of air conditioning wind blown out from an air outlet 16.

The control device 2 estimates a position of the terminal device P by using a principle similar to GPS positioning. In the GPS positioning, a reception position is estimated based on an arrival time of radio waves from four satellites whose positions are known. A principle of the GPS positioning is applicable so that the reception position for receiving the radio waves from the satellites is regarded as the terminal device P and the satellite is regarded as the ultrasound sensor M.

Here, a principle of sound source position estimation by a four-point survey used in the GPS will be described.

In the sound source position estimation by the four-point survey, when coordinates of the four satellites are (A1, B1, and C1), (A2, B2, and C2), (A3, B3, and C3), and (A4, B4, and C4), the coordinates of a position of a receiver are (x, y, and z), the time lag of the receiver is d, and a speed of the radio waves is the speed of light c, the following simultaneous equations are obtained.

$$f1 = (x\text{-}A1)^2 + (y\text{-}B1)^2 + (z\text{-}C1)^2 - (c(t1\text{-}d))^2 = 0$$

$$f2 = (x\text{-}A2)^2 + (y\text{-}B2)^2 + (Z\text{-}C2)^2 - (c(t2\text{-}d))^2 = 0$$

$$f3 = (x\text{-}A3)^2 + (y\text{-}B3)^2 + (z\text{-}C3)^2 - (c(t3\text{-}d))^2 = 0$$

$$f4 = (x\text{-}A4)^2 + (y\text{-}B4)^2 + (z\text{-}C4)^2 - (c(t4\text{-}d))^2 = 0$$

The position of the receiver can be calculated by solving the equations.

Next, the relationship between (a) the distance between the terminal device P and the ultrasound sensor M and (b) a position estimation error will be described using the ultrasound sensor M provided in the air conditioner 1 and the terminal device P used indoors.

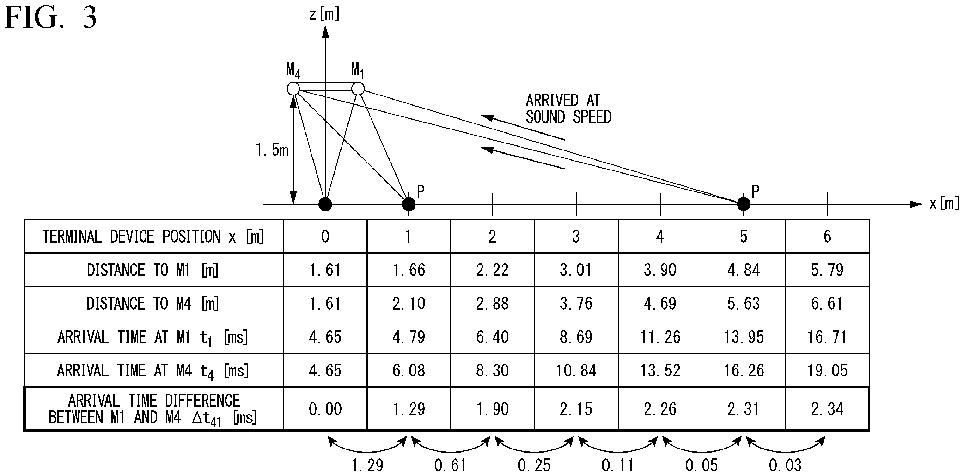

Fig. 3 is view for describing an arrival time of the ultrasonic waves, which varies depending on the positions of the ultrasound sensors M1 and M4 and the position of the terminal device P.

In the case of the example illustrated in Fig. 3, when the position of the terminal device P is x = 0 m (directly below the air conditioner 1), the arrival time difference Δt41 of the ultrasonic waves detected by the ultrasound sensors M1 and M4 is 0. However, when the position of the terminal device P is displaced by 6 m from directly below the air conditioner 1 is x = 6 m, it is understood that the arrival time difference Δt41 of the ultrasonic waves detected by the ultrasound sensors M1 and M4 increases.

The position is estimated by the arrival time difference of the ultrasonic waves among the ultrasound sensors M. The detection error of the arrival time difference which is allowable in order to obtain a position estimation accuracy of ± 1 m is more severe as the terminal device P is located farther away. In a trial calculation when the height difference between the air conditioner 1 and the terminal device P was 1.5 m and x = 4 m was satisfied, the detection was displaced by 0.05 ms (corresponding to one cycle of 20 kHz) and the position estimation error was 1 m.

In a case where a distance between the ultrasound sensors M is 0.84 m and the accuracy of ± 1 m needs to be obtained at x = 5 m, it is recognized that an error of the arrival time difference Δt41 of the ultrasonic waves needs to be maintained within only 0.03 ms (corresponding to 0.6 cycles of 20 kHz).

As described above, it can be recognized that it is preferable to increase the distance between the ultrasound sensors M in order to identify the arrival time difference which affects the position estimation accuracy as accurately as possible.

Next, the structure of the air conditioner 1 of the present non claimed example will be described.

As illustrated in Fig. 4, the air conditioner 1 has a housing 6 embedded in a ceiling C. The housing 6 includes a suction port 15 and an air outlet 16 which are formed in the housing 6, and a louver 17 that opens and closes the air outlet 16 and changes a direction of air conditioning wind blown out from the air outlet 16. An indoor unit of the air conditioner 1 has a substantially square shape when viewed from below.

The housing 6 has a heat exchanger and a blower fan (not illustrated). The housing 6 adjusts a temperature and a humidity of indoor air suctioned via the suction port 15, and blows the air into the indoor side as the air conditioning wind. An outdoor unit (not illustrated) is connected to the housing 6. A refrigerant circulates between the indoor unit and the outdoor unit of the air conditioner 1.

A panel 19 called a decorative panel or a panel of the ceiling C is attached to the housing 6. The panel 19 is exposed indoors (below).

The suction port 15 for suctioning the indoor air is open downward in a central portion of the air conditioner 1. The suction port 15 is provided with a suction grill 18 to which an air filter (not illustrated) is attached. The suction grill 18 has a rectangular shape when viewed from below. The four sides of the panel 19 of the air conditioner 1 and the four sides of the suction grill 18 are parallel to each other.

The air outlet 16 is formed to surround a periphery of the suction port 15 and is open downward. Each of the air outlets 16 corresponds to each side of the panel 19 of the air conditioner 1 and extends along first direction parallel to each side of the panel 19. In other words, the air conditioner 1 has two sets of a pair of the air outlets 16 extending in a direction along the two mutually connected sides of the suction port 15.

The louver 17 pivots around an axis A along an extending direction of the air outlet 16. The louver 17 can pivot between a closing position for closing the air outlet 16 and an opening position for opening the air outlet 16. A surface of the panel 19 and the louver 17 are flush with each other when the louver 17 is located at the closing position. Each of the louvers 17 has a rectangular shape having an external dimension slightly smaller than that of the respective air outlets 16. The louver 17 pivots by using a drive device such as an actuator (not illustrated). The louver 17 guides the air conditioning wind blown out from the air outlet 16 in a direction intersecting with the axis A.

The ultrasound sensors M are respectively disposed at four corners of the square-shaped panel 19 so that the ultrasound sensors M do not interfere with the air conditioning wind blown from the air outlet 16 and a distance from each other is farthest on the panel 19. In other words, the ultrasound sensors M are respectively disposed at both ends of the air outlet 16 and between the air outlets 16 adjacent to each other. The ultrasound sensor M is disposed between a pair of the air outlets 16 extending in a direction along the two mutually connected sides of the suction port 15.

Specifically, the ultrasound sensor M is disposed in the vicinity of both ends of the air outlet 16 and is disposed at a position where extension lines of a pair of the adjacent air outlets 16 intersect with each other.

According to the above-described non claimed example, the ultrasound sensors M are provided at both ends of the air outlet 16. Therefore, noise generated by the air conditioning wind blown out from the air outlet 16 can be avoided. In this manner, the received ultrasonic waves can be clear, and accuracy of the ultrasound sensors M can be improved. In the air conditioning system 100 of the present non claimed example, the accuracy of the arrival time difference of the ultrasonic waves can be improved, and the position calculation accuracy can be improved.

In addition, the ultrasound sensors M can be disposed at positions spaced apart from each other. In this manner, when the ultrasonic waves are received from a single ultrasound oscillator source and are measured based on an arrival time difference thereof, requirements for a measurement error can be mitigated. In the air conditioning system 100 of the present non claimed example, requirements for an allowable measurement error of the arrival time difference can be mitigated.

In addition, a configuration is adopted so that the ultrasound sensor M is provided in the housing 6. Therefore, the air conditioning system 100 can be constructed at a lower cost, compared to a configuration in which the sensor is provided separately from the housing 6.

In addition, the air conditioner 1 is embedded in the ceiling C. In this manner, the ultrasound sensor M can be disposed on the ceiling C, and the ultrasonic waves emitted from the terminal device P in the indoor space R can be received from the ceiling C.

In addition, the air conditioner 1 has the rectangular suction port 15 and the air outlet 16 along the four sides of the suction port 15. In addition, the ultrasound sensor M is disposed between the air outlets 16. In this manner, the ultrasound sensor M can be efficiently disposed.

Hereinafter, an air conditioner according to claim 1 will be described in detail with reference to the drawings. In the present example according to the invention as claimed, differences from the above-described first non claimed will be mainly described, and like elements will be omitted in the description.

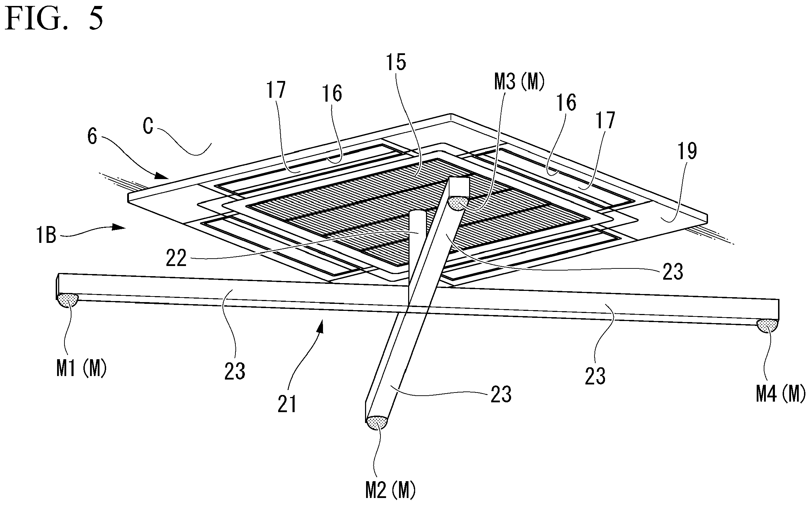

As illustrated in Fig. 5, the ultrasound sensor M of an air conditioner 1B of the present embodiment is provided in a bracket 21 attached to the suction grill 18 of the air conditioner 1B instead of the panel 19 of the air conditioner 1.

The bracket 21 has a base 22 that can be attached to the suction grill 18 by a predetermined fixing method, and four beams 23 that are connected to a lower end of the base 22.

For example, the base 22 can be attached to the suction grill 18 by using a plurality of claws that can be hooked on the suction grill 18 or a fastening member such as a binding band. The base 22 is a rod-shaped member extending in an upward-downward direction. It is preferable that the base 22 be as short as possible. It is preferable that the base 22 be attached to a center of the suction grill 18.

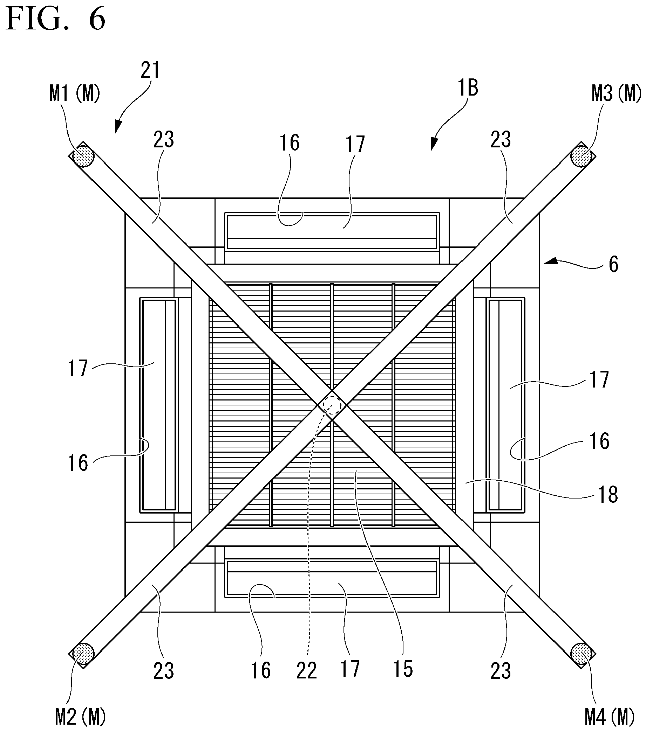

As illustrated in Fig. 6, the beam 23 is a rod-shaped member extending from the lower end of the base 22 toward four corners of the panel 19. The beam 23 extends in a horizontal direction from the lower end of the base 22. The plurality of beams 23 are disposed so that angles formed by the beams 23 adjacent to each other have an equal interval. Specifically, the angle formed by the beams 23 adjacent to each other is approximately 90°.

The beam 23 is formed so that the tip of the beam 23 is located outside the panel 19 when viewed from below. That is, a length of the beam 23 is longer than 1/2 of a diagonal length of the panel 19.

The ultrasound sensor M is disposed in the tip of the beam 23 to face downward (indoor side). The tip of the beam 23 is located outside the panel 19 when viewed from below. As a result, the ultrasound sensor M is disposed between the air outlets 16 adjacent to each other when viewed from below, and is disposed outside the panel 19.

According to the above-described embodiment, since the ultrasound sensor M is disposed via the bracket 21, the ultrasound sensor M can be more freely disposed. In addition, the ultrasound sensor M is located outside the panel 19 when viewed from below. In this manner, requirements for an allowable measurement error of the arrival time difference in the air conditioning system 100 can be further mitigated.

In the above-described embodiment, a shape of the bracket 21 is a shape having the four beams 23. However, any desired shape may be adopted as long as the ultrasound sensor M can be held to be disposed between the air outlets 16 adjacent to each other when viewed from below.

Hereinafter, an air conditioner according to a second unclaimed example will be described in detail with reference to the drawings. In the present non claimed example, differences from the above-described first non claimed example will be mainly described, and like elements will be omitted in the description.

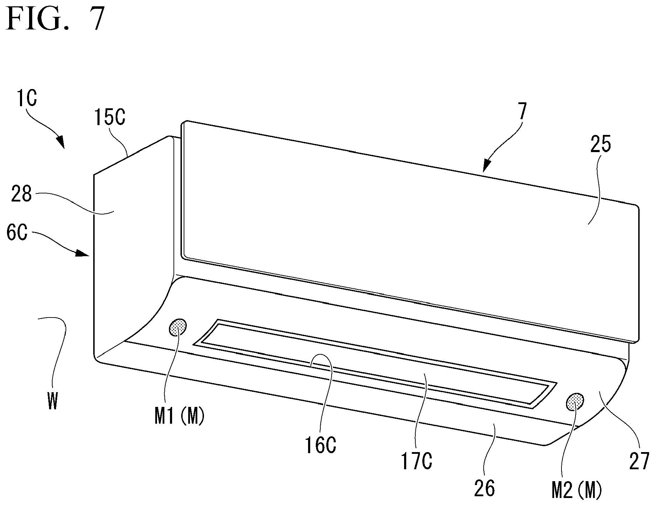

As illustrated in Fig. 7, an air conditioner 1C of the present is wall-mounted and fixed to a wall W instead of the ceiling C.

The air conditioner 1C includes a housing 6C having a heat exchanger and a blower fan (not illustrated), and a cover unit 7 that covers the housing 6C. A rear surface of the housing 6C is fixed to the wall W. A suction port 15C of the indoor air is provided in an upper portion of the housing 6C.

The cover unit 7 includes a front panel 25 that covers a front surface of the housing 6C, a bottom panel 26 that covers a bottom surface of the housing 6C, a connection panel 27 that connects the front panel 25 and the bottom panel 26 to each other and has a pair of side panels 28 that cover right and left side portions of the housing 6C.

An air outlet 16C of the air conditioner 1C of the present example is formed in the connection panel 27 and extends along the extending direction of the connection panel 27. In other words, the air outlet 16C extends in the horizontal direction between the front surface of the housing 6C and the bottom surface of the housing 6C.

The ultrasound sensors M are disposed such that the ultrasound sensors M do not interfere with the air conditioning wind blown out from the air outlet 16 and the distance from each other is maximized on the cover unit 7. In other words, the ultrasound sensors M are disposed at both ends of the air outlet 16C. Specifically, the ultrasound sensors M are disposed in the vicinity of both ends of the air outlet 16C and are disposed on an extension line of the air outlet 16C.

According to the above-described non claimed example, the ultrasound sensor M can be efficiently disposed in the air conditioner 1C having a type installed on the wall W.

[Reference Signs List]

  1, 1B, 1C Air conditioner
  2 Control device
  3 Arrival time difference calculation unit
  4 Position estimation unit
  6 Housing
  10 Microphone
  11 Amplifier
  12 Filter
  13 Comparator
  15 Suction port
  16 Air outlet
  17 Louver
  18 Suction grill

19 Panel
21 Bracket
22 Base
23 Beam
25 Front panel
26 Bottom panel
27 Connection panel
100 Air conditioning system
C Ceiling
M Ultrasound sensor
P Terminal device
S Ultrasound sensor
W Wall

## Claims

**1.** An air conditioner (1B) comprising:

a housing (6) configured to be embedded in a ceiling (C);
a suction port (15) formed in the housing (6) and has a rectangular shape, wherein the suction port (15) is provided with a suction grill (18);
four air outlets (16) formed in the housing (6) and extending along four sides of the suction port (15);
four louvers (17) that pivot around an axis (A) along an extending direction of each of the air outlets (16) and are configured to guide air conditioning wind blown out from the air outlets (16) in a direction intersecting with the axis (A);
a bracket (21) attached to the housing (6), wherein the bracket (21) has a base (22) that is attachable to the suction grill (18) and four beams (2) that are connected to a lower end of the base (22);
four ultrasound sensors (M) attached to the bracket (21) and disposed between the air outlets (16) adjacent to each other when viewed from below, wherein each of the four ultrasound sensors (M) are disposed in the tip of each of the four beams (23).

## Patentansprüche

**1.** Klimaanlage (1B), umfassend:

ein Gehäuse (6), das konfiguriert ist, um in eine Decke (C) eingelassen zu werden;
eine Ansaugöffnung (15), die in dem Gehäuse (6) gebildet ist und eine rechteckige Form aufweist, wobei die Ansaugöffnung (15) mit einem Ansauggitter (18) versehen ist;
vier Luftauslässe (16), die in dem Gehäuse (6) gebildet sind und sich entlang der vier Seiten der Ansaugöffnung (15) erstrecken;
vier Lamellen (17), die um eine Achse (A) entlang einer Erstreckungsrichtung von jedem der Luftauslässe (16) schwenken und konfiguriert sind, um Klimatisierungswind, der aus den Luftauslässen (16) ausgeblasen wird, in eine Richtung zu leiten, die die Achse (A) schneidet;
einen an dem Gehäuse (6) befestigten Bügel (21), wobei der Bügel (21) eine Basis (22), die an dem Sauggitter (18) anbringbar ist, und vier Träger (2), die mit einem unteren Ende der Basis (22) verbunden sind, aufweist;
vier Ultraschallsensoren (M), die an der Halterung (21) angebracht und zwischen den Luftauslässen (16), von unten gesehen, nebeneinander angeordnet sind, wobei jeder der vier Ultraschallsensoren (M) in der Spitze von jedem der vier Träger (23) angeordnet ist.

## Revendications

**1.** Climatiseur (1B) comprenant :

un boîtier (6) configuré pour être intégré dans un plafond (C) ;
un orifice d'aspiration (15) formé dans le boîtier (6) et qui a une forme rectangulaire,

l'orifice d'aspiration (15) étant prévu avec une grille d'aspiration (18) ;

quatre sorties d'air (16) formées dans le boîtier (6) et s'étendant le long des quatre côtés de l'orifice d'aspiration (15) ;

quatre déflecteurs (17) qui pivotent autour d'un axe (A) le long d'une direction d'extension de chacune des sorties d'air (16) et sont configurés pour guider le flux de climatisation soufflé depuis les sorties d'air (16) dans une direction coupant l'axe (A) ;

une console (21) fixée au boîtier (6), la console (21) ayant une base (22) qui peut être fixée à la grille d'aspiration (18) et quatre portants (2) qui sont raccordées à une extrémité inférieure de la base (22) ;

quatre capteurs à ultrasons (M) fixés à la console (21) et disposés entre les sorties d'air (16) adjacentes entre elles, lorsqu'elles sont observées de dessous, chacun des quatre capteurs à ultrasons (M) étant disposé dans la pointe de chacune des quatre portants (23).

FIG. 1

FIG. 2

FIG. 3

| TERMINAL DEVICE POSITION x [m] | 0 | 1 | 2 | 3 | 4 | 5 | 6 |
|---|---|---|---|---|---|---|---|
| DISTANCE TO M1 [m] | 1.61 | 1.66 | 2.22 | 3.01 | 3.90 | 4.84 | 5.79 |
| DISTANCE TO M4 [m] | 1.61 | 2.10 | 2.88 | 3.76 | 4.69 | 5.63 | 6.61 |
| ARRIVAL TIME AT M1 $t_1$ [ms] | 4.65 | 4.79 | 6.40 | 8.69 | 11.26 | 13.95 | 16.71 |
| ARRIVAL TIME AT M4 $t_4$ [ms] | 4.65 | 6.08 | 8.30 | 10.84 | 13.52 | 16.26 | 19.05 |
| ARRIVAL TIME DIFFERENCE BETWEEN M1 AND M4 $\Delta t_{41}$ [ms] | 0.00 | 1.29 | 1.90 | 2.15 | 2.26 | 2.31 | 2.34 |

1.29    0.61    0.25    0.11    0.05    0.03

EP 3 779 307 B1

FIG. 4

FIG. 5

EP 3 779 307 B1

FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001304655 A

- JP 2010134367 A